# EUROPEAN PATENT SPECIFICATION

(11) **EP 3 395 219 B1**
(45) Date of publication and mention of the grant of the patent: **30.09.2020**
(21) Application number: 18164284.4
(22) Date of filing: 27.03.2018
(51) Int. Cl.: A47J 43/044, A47J 43/046, A47J 43/07, A47J 27/00, H05B 6/06, H05B 6/12

(54) **HEATING ARRANGEMENT**
HEIZANORDNUNG
SYSTÈME DE CHAUFFAGE

(30) Priority: 28.04.2017 GB 201706833
(43) Date of publication of application: 31.10.2018
(73) Proprietor: Kenwood Limited, Havant, Hampshire PO9 2NH (GB)
(72) Inventor: HUNT, Martin, Havant, Hampshire PO9 2NH (GB); SEIDLER, Mark, Havant, Hampshire PO9 2NH (GB)
(74) Representative: Hector, Annabel Mary

(56) References cited:
- CN-A- 106 510 444
- CN-A- 106 510 495

## Description

The present invention relates to a heating arrangement. The present invention also relates to a food processor, in particular a food processor including a heating arrangement.

Cooking food processors such as the Kenwood Cooking Chef™ and Kenwood kCook Multi™ are kitchen appliances which incorporate both heating elements and food processing tools (e.g., whisks, beaters, mixing tools, blending tools, cutting tools etc.) and are commonly used to cook, process, or simultaneously cook and process working media such as food. Typically cooking food processors have a container associated with them, either removable attachable to the appliance, or integral to its construction. Where multiple removable food containers of differing sizes or footprints (i.e., the shape/size of the area of the appliance contacted by the food container) are provided, it is desirable that the cooking food processor be able to automatically adapt to heat the differently-sized/shaped containers in a quick, safe, and convenient manner.

Induction heating elements are a convenient and efficient way of heating an induction-heatable container. Unfortunately, because the surface under which the induction coil is located typically is not directly heated by the coil, where the container does not entirely cover the surface which the coil is directly beneath they may be unaware of the danger posed by placing induction-heatable metal objects (e.g., a ladle) onto the surface next to the container. In this circumstance the metal object may be heated by the induction coil and potentially burn the user if they attempt to pick it up or otherwise contact it.

CN 106510495 relates to a multifunctional food processing platform having a control system for driving a motor according to the food processing assembly on the platform.

CN 106510444 relates to a multifunctional automatic cooking machine having a control mechanism for controlling mechanisms for heating, stirring, food adding and seasoning.

The present invention is directed at least partially to ameliorating the above-described problems.

### Summary of the Invention

The invention provides a heating arrangement, comprising: a platform for a container to be heated; an attachment arrangement for attaching at least two containers of different sizes to the platform; at least one heating element configured to heat a container on the platform; at least one sensor for detecting at least one property relating to the size of a container attached to the platform; and a control arrangement arranged to control the heating element(s) in dependence on the output of the sensor.

This can help avoid the inappropriate, unsafe, and inefficient energisation of heating elements not needed for heating the container attached to the platform.

The two or more heating elements may include induction heating elements. As discussed above, the problem of unsafe heating element energisation may be particularly acute in relation to induction heating elements.

Preferably, the two or more heating elements respectively correspond to different areas of the platform. In this way one area of the platform (or an object placed on it) may be heated and another may be left unheated to avoid heating objects placed on it.

The two or more heating elements may be arranged so as to be nested within each other. This may provide a space-efficient arrangement. In one example, the heating elements are arranged concentrically. This may permit smaller and larger containers to be received and heated about the same point, simplifying design.

Optionally, the one or more sensors comprise at least one sensor chosen from the group consisting of:
- one or more switches actuatable by a protrusion of a container when it is attached to the platform,
- one or more radio frequency detectors for detecting and interrogating an electronic tag associated with the container located so as to communicate with a container only when it is attached,
- one or more reed-switches actuatable by a magnet associated with a container when it is attached,
- Electrical contacts located so as to form a complete circuit with a container when it is attached.

These sensors may provide reliable, cheap, and convenient ways of sensing the attachment and size/footprint of a container.

Preferably, the one or more sensors are further configured to detect the attachment of a cover over an opening of a container attached to the platform, and wherein the heating element control is further configured to only energise the heating elements responsive to feedback from the sensors indicating that a lid is attached to the container. This prevents operation without the lid being attached, which may increase safety.

The invention may provide a food processing appliance including the heating arrangement.

For example, the food processing appliance may have a motor-driven drive-shaft extending through the platform and through a channel defined through or between the two or more heating elements to engage with a food processing tool of a container received on the platform for driving the food processing tool for processing food within the container. In this way food processing may take place within the heated area.

Preferably, the food processing appliance has a user interface configured to control the energy output of the heating elements energized by the heating element control, and provide feedback to the user. In this way the user may control only the heat-output of the heating elements energized by the heating element control.

Preferably, the user interface is further configured to provide container attachment status information to a user. In this way the user may know if the container is incorrectly attached.

The food processing appliance may further comprise two or more containers of differing size and/or footprint configured to be removably attachable to the platform. The utility of the food processing appliance may be thus increased.

Preferably, the food processing appliance further comprises a wireless communications module configured to transmit feedback from the one or more sensors to an external server or portable electronic communications device. In this way information regarding the appliance may be provided remotely.

Preferably, the food processing appliance further comprises a weight sensor configured to measure the weight of food within a container attached to the platform, and where the heating element control is further configured to energise and control the heating elements responsive to feedback from the weight sensor.

Thus according to the invention, there is provided a heating arrangement, comprising: a platform for a container to be heated; an attachment arrangement for attaching containers of different types to the platform; at least one heating element configured to heat a container on the platform; at least one sensor for detecting at least one property relating to the type of a container on the platform; and a control arrangement arranged to control the heating element(s) in dependence on the output of the sensor.

Preferably, the at least one property includes a size of the container or of a base of the container. Thus the heating arrangement can be adjusted depending upon the size of the container. There may also be a sensor for detecting the attachment status of the container, and/or the attachment of a lid to the container. Preferably, the control arrangement is arranged to energise the heating element only when the attachment of the container, or of a lid to the container is detected.

The platform may comprise a plurality of heating zones; and the control arrangement may be arranged to control the heating element(s) selectively to heat at least one of a plurality of heating zones in dependence on the output of the sensor.

Preferably, the heating arrangement comprises a plurality of heating elements, each corresponding to one of the plurality of heating zones. For example, the heating zones may be arranged so as to be nested within each other and/or so as to be concentric. Thus the control arrangement may for example operate to energise only a smaller heating zone for a small container.

Preferably, the one or more sensors comprise at least one sensor chosen from the group consisting of:
a. one or more mechanical switches,
b. one or more radio frequency detectors for detecting and interrogating an electronic tag associated with the container and/or a lid,
c. one or more reed-switches actuatable by a magnet associated with a container and/or a lid,
d. electrical contacts located so as to form a complete circuit with further electrical contacts associated with the container and/or a lid.

The at least one heating element may include at least one induction heating element.

According to another aspect of the invention, there is provided a kitchen appliance comprising the heating arrangement as defined above.

According to another aspect of the invention, there is provided a food processor comprising the heating arrangement as defined above.

Preferably, the food processor further comprises a motor-driven drive-shaft for engaging with a food processing tool for driving the food processing tool in a container on the platform for processing food within the container.

Preferably, the food processor further comprises a user interface configured to control the energy output of the at least one heating element energized by the heating element control, and provide feedback to the user. The user interface may be further configured to provide container attachment status information to a user.

Preferably, the food processor further comprises two or more containers of differing size and/or type configured to be removably attachable to the platform.

Preferably, the food processor further comprises a wireless communications module configured to transmit feedback from the at least one sensor to an external server and/or portable electronic communications device. For example, the at least one sensor may include a weight sensor and the at least one property may include the weight of food within a container attached to the platform.

The invention also encompasses a kit of parts for constructing any of the apparatuses or apparatus elements herein described, and further extends to the drawings.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

In this specification the word 'or' can be interpreted in the exclusive or inclusive sense unless stated otherwise.

Furthermore, features implemented in hardware may generally be implemented in software, and vice versa. Any reference to software and hardware features herein should be construed accordingly.

Whilst the invention has been described in the field of domestic food processing and preparation machines, it can also be implemented in any field of use where efficient, effective and convenient preparation and/or processing of material is desired, either on an industrial scale and/or in small amounts. The field of use includes the preparation and/or processing of: chemicals; pharmaceuticals; paints; building materials; clothing materials; agricultural and/or veterinary feeds and/or treatments, including fertilisers, grain and other agricultural and/or veterinary products; oils; fuels; dyes; cosmetics; plastics; tars; finishes; waxes; varnishes; beverages; medical and/or biological research materials; solders; alloys; effluent; and/or other substances, and any reference to "food" (or similar language) herein may be replaced by such working mediums. It will be appreciated that the processing of food may include the processing and/or blending of liquid, and may also include the processing of solid food or ice into a liquid form.

The invention described here may be used in any kitchen appliance and/or as a stand-alone device. This includes any domestic food-processing and/or preparation machine, including both top-driven machines (*e.g.* stand-mixers) and bottom-driven machines (*e.g.* blenders). It may be implemented in heated and/or cooled machines. It may be used in a machine that is built-in to a work-top or work surface, or in a stand-alone device. The invention can also be provided as a stand-alone device, whether motor-driven or manually powered.

One or more aspects will now be described, by way of example only and with reference to the accompanying drawings having like-reference numerals, in which:
Figure 1 shows a drawing of a heating arrangement according to an aspect of the invention in a perspective view;
Figure 2 shows a drawing of a small bowl and kitchen appliance incorporating the heating arrangement of Figure 1 in a perspective view;
Figure 3 shows a cut-away drawing of the small bowl and kitchen appliance of Figure 2 in a side view;
Figure 4 shows a drawing of a large bowl and kitchen appliance incorporating the heating arrangement of Figure 1 in a perspective view;
Figure 5 shows a cut-away drawing of the small bowl and kitchen appliance of Figure 4 in a side view;
Figure 6 shows a schematic drawing of a bowl and kitchen appliance incorporating the heating arrangement of Figure 1;
Figure 7 shows a drawing of a lidded small bowl and an exemplary kitchen appliance in a perspective view;
Figure 8 shows a drawing of a lidded large bowl and the kitchen appliance of Figure 7 in a perspective view;
Figure 9A shows an exploded drawing of an exemplary sensor of the kitchen appliance of Figure 7 in a perspective view; and
Figure 9B shows a detailed drawing of an exemplary sensor attached to the kitchen appliance of Figure 7 in a perspective view.

### Specific Description

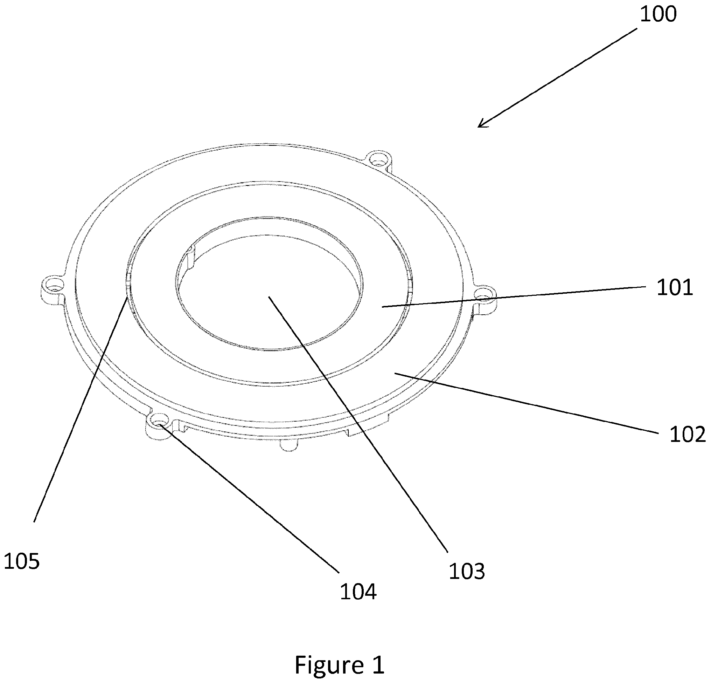

Figure 1 illustrates a heating arrangement 100 according to a first embodiment. The heating arrangement 100 has two concentric induction heating elements, a smaller element 101, and a larger heating element 102, which are arranged so that the smaller one 101 is nested within the larger one 102. A gap 105 separates the two heating elements, and a through-hole or channel 103 is defined through the centre of the heating arrangement 100. Lugs 104 are provided about the periphery of the heating arrangement 100 to facilitate its attachment onto or beneath a surface 201 of a kitchen appliance 200 (or other suitable surface) using suitable fasteners, where it will carry out heating of a container 300 or 400 containing food to be cooked.

Whilst only two heating elements 101 and 102 are shown, multiple heating elements including three or more heating elements may be used. Whilst the heating elements are described as induction-heaters, other heating elements including resistive, thick-film etc. may be used, though the described arrangement is considered particularly advantageous when induction heaters are used due to the above-described problems related to induction-heaters.

Whilst two separate induction coils 101 and 102 are shown, instead a single continuous induction coil may be provided. In this case an additional power lead would be joined to it at the same diameter as the smaller coil 101 of the previous solution, to allow only this section of the single induction coil to be energised. The term "multiple heating elements" as used herein includes a single heating element divided up into sections in this fashion. Whilst the heating elements 101 and 102 are shown as being nested one within the other, and concentrically arranged, corresponding to different zones (which are also nested and concentrically arranged) of the platform 201, other suitable configurations are possible. For example, they may be located side-by-side, stacked, or only partially nested. Additionally they need not be ring-shaped but could be any other suitable shape including square, rectangular, star-shaped etc.

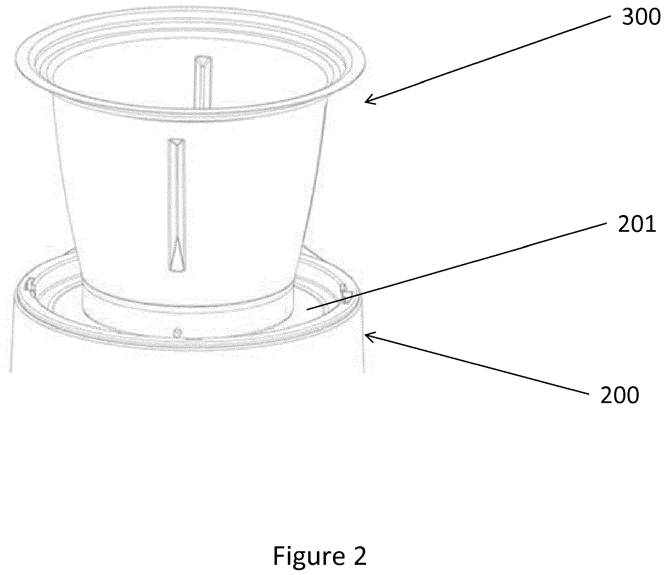

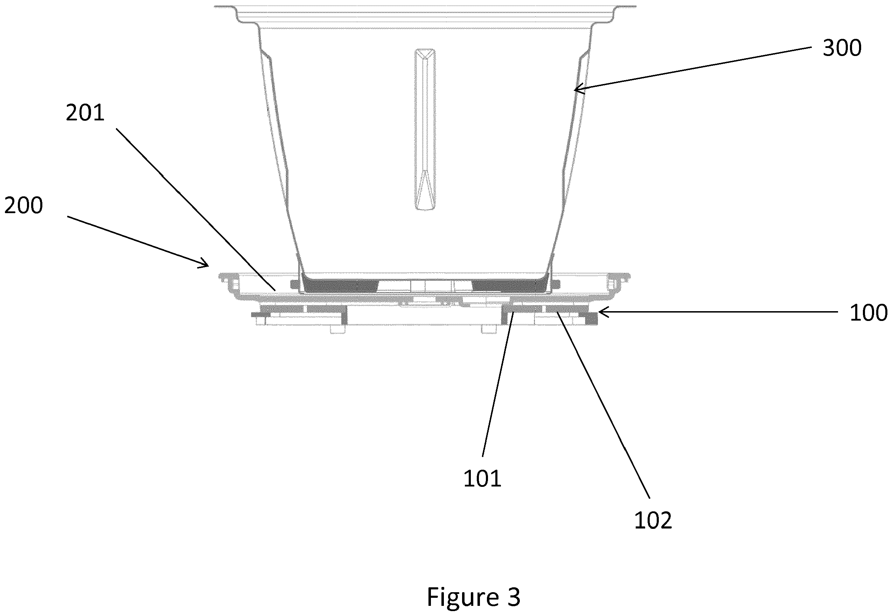

Figs. 2 and 3 show a kitchen appliance 200 incorporating the heating arrangement 100, where the heating arrangement is located beneath a platform or surface 200 so as to allowing warming of the contents of the container by the heating arrangement 100. The platform 201 is constructed with attachment formations permitting containers of differing size or footprint to be attached to it. Each of the heating elements 101, 102 is arranged to correspond to respective heating zones of the platform.

As illustrated in Figs. 2 and 3, when a smaller container 300 is attached to the platform 201 only a first heating zone (i.e. an area of the platform 201 directly above and corresponding to the smaller heating element 101) is entirely covered by the container 300. In this circumstance, to avoid accidental burning caused by objects being placed next to the container 300 becoming hot (or, where non-induction-type heating elements are used, direct contact with the heating element or of the heating zone on the platform 201 corresponding to the heating element) only the smaller heating element 101 is energised thereby to heat the first heating zone.

Container 300 is secured to the platform 201 using any appropriate attachment mechanism or arrangement. For example, a groove may be provided on the surface of the platform 201 into which a corresponding ridge or rib of the container 300 locates. Alternatively releasable clips may be provided on one of the container 300 or the platform 201 which lock onto a corresponding feature of the other of the container 300 or the platform 201. In a further alternative, screws, bolts, plugs, latches, magnets, or any other suitable attachment means may be used.

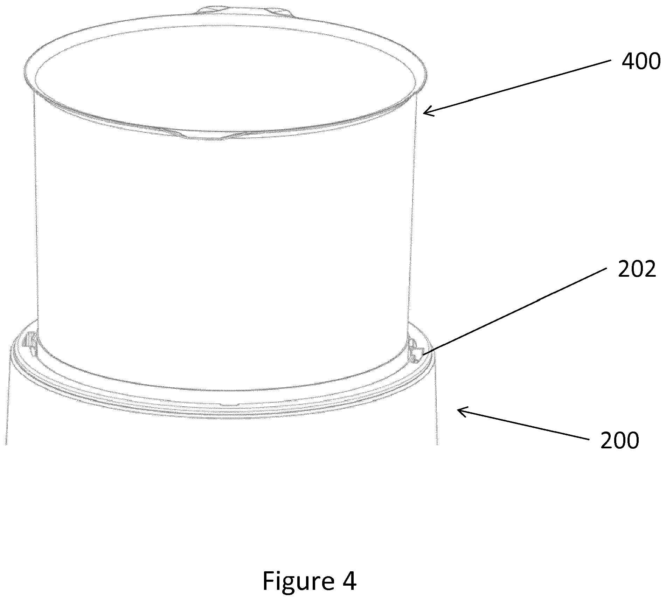

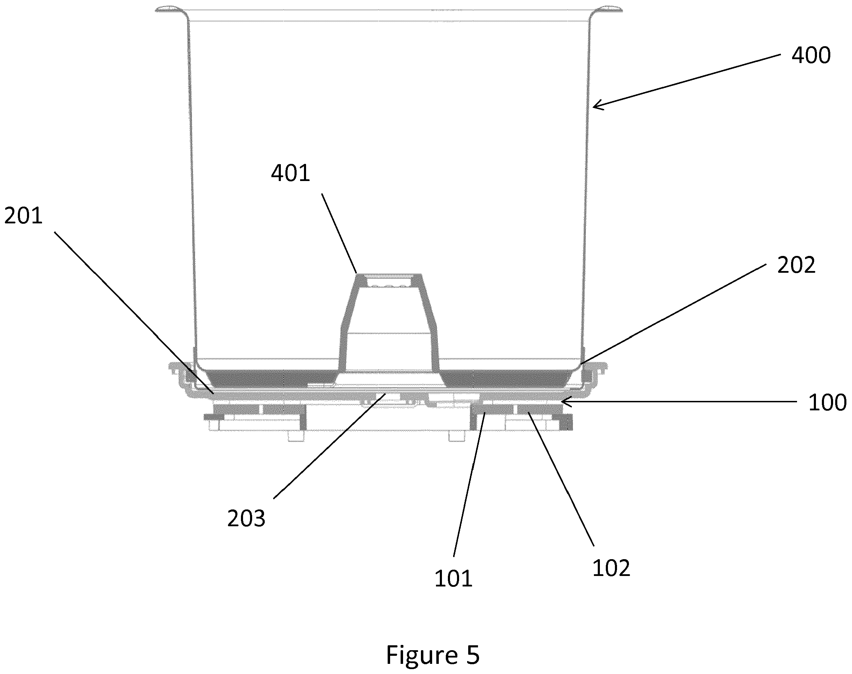

Figs. 4 and 5 show the kitchen appliance 200 with a much larger container 400 of differing footprint to the smaller container 300 attached via a releasable attachment mechanism 202 that may be a clip that releasably engages with a protrusion of the container 400. As can be seen in Fig. 5, 4 the larger container 400 covers substantially the entire area of the platform 201, so as to cover both the first heating zone and a second heating zone that respectively correspond to the heating elements 101 and 102. In this case, both heating elements may be safely energised to heat the first and second heating zones.

The container 400 includes a tool-mount 401 on which rotary food-processing tools may be mounted and driven to carry out food processing, including blending, whisking, mixing, slicing, and stirring tools. When a tool is not mounted on the tool-mount 401 apertures on which tools may be mounted and driven may be closed by a removable plug. The drive-shaft for driving the rotary tool may extend from a motor of the food processing appliance 200, through the aperture 103 of the heating arrangement 100, through an aperture 203 defined through the platform 201, and into the tool mount 401 to engage with the tool. The drive-shaft may be a removable adapter, or a fixed shaft.

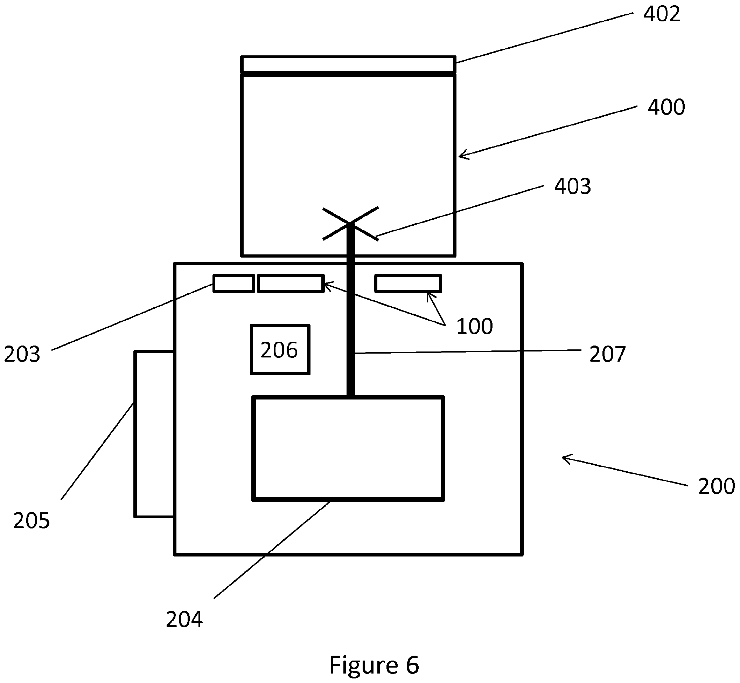

Fig. 6 shows a schematic drawing of the whole food processing machine 200 with the larger container 400 attached. A sensor 203 is arranged to detect when the container 400 is safely attached, for example by being actuated by the attachment of the container to the platform, and to recognise the container 400 and provide feedback to a data processor 206 which the data processor 206 (which may be a printed circuit board assembly or PCBA) may then use to control the heating arrangement 100 to ensure that only the heating elements covered by the footprint of the container 400 are energised, thereby to heat only those heating zones covered by the footprint of the container.

The sensor 203 may be any suitable sensing means for detecting the attachment and/or type of the container. This may include switches positioned corresponding to different footprints and sizes, so that different switches are actuated by protrusions of different containers that may be attached to the food processor 200. It may also, or alternatively include an RFID sensor (or other suitable radio frequency sensor) for sensing and interrogating an RFID tag (or other suitable tag, including NFC tags) associated with the container only when it is properly attached, or one or more reed-switches located so as to be actuated by magnetic elements incorporated at different locations within each type of container. In a further alternative, it may include a set of electric contacts which form a complete circuit with an element of a specific type of container when it is properly attached, thus allowing the type of container to be identified by which electrical contacts it completes a circuit with. The sensor 203 may also be arranged to detect the size of the container.

The sensor 203 may also include a weight sensor for measuring a weight of the food in the container and providing this information to the data processor 206. The data processor 206 may then use this information for controlling the heating arrangement 100. For example, where a large container is attached to the food processing appliance 200, but only a small amount of food is detected by the weight sensor, the data processor 206 may only energise one of the heating elements 101 and 102.

The sensor 203 may also include a lid-attachment sensor for detecting the attachment of a lid 402 to the container 400, and provide feedback from this sensor to the data processor 206. The data processor 206 may then respond to this feedback by not energising the heating elements of the heating arrangement 100, or not energising the motor 204 to drive the food processing tool 403 via the shaft 207, until the lid-attachment sensor detects that a lid 402 is safely attached.

An example of a lid-attachment sensor could include a switch actuated by a push-rod depressed against the bias of a spring into contact with the switch when a lid is attached. However, other suitable lid-attachment detection sensors may be used, such as those previously described for detecting the attachment of the container.

A user interface 205 is provided on the food processing appliance 200 which allows the user to provide instructions to the data processor 206 for controlling the food processing appliance 200, and for the data processor 206 to provide feedback back to the user. This feedback may include information regarding the attachment status of the lid 402 and the container 400, and instruction on how to properly attach them. The data processor 206 may respond to the input of a desired temperature for the container 400 and/or its contents to be heated to by controlling only those heating elements of the heating arrangement 100 that are totally covered by the container 400 to increase or decrease their heat-output, leaving the other elements un-energised.

The processor 206 may also include a wireless communication module (e.g., a WiFi or Bluetooth module) whereby feedback from the sensors 203 may be transmitted to an external server or to a mobile communications device (e.g., a mobile phone or tablet). The processor 206 may also receive instructions for the operation of the food processing appliance 200 via the wireless communication module.

In a simplified configuration, the sensor 203 could simply be a push-switch located to be depressed only by a protrusion of the large container 400 when it is correctly attached, and not by the smaller container 300. The depression of the switch could complete a circuit allowing the energising of both the smaller and larger heating elements 101 and 102, and when the switch is not depressed only the smaller heating element 101 would be energised. In this case the data processor 206 might be omitted or simplified. The term "heating element control" as used herein also encompasses the control of the heating elements using this simplified push-switch mechanism.

Any element shown or described in relation to Fig. 6 may engage in data-communication with any other element bi-directionally as suitable to carry out their above-described functions.

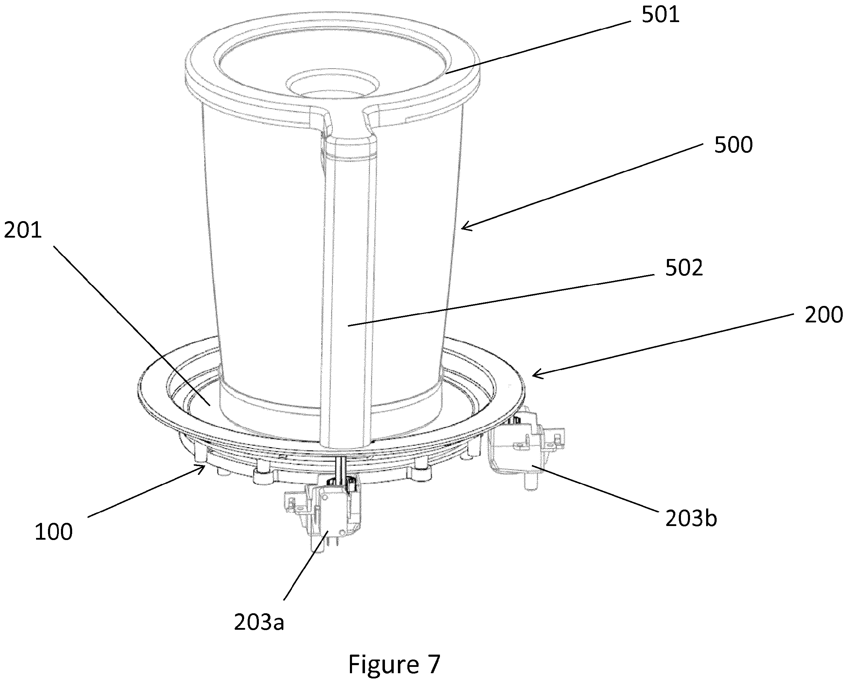

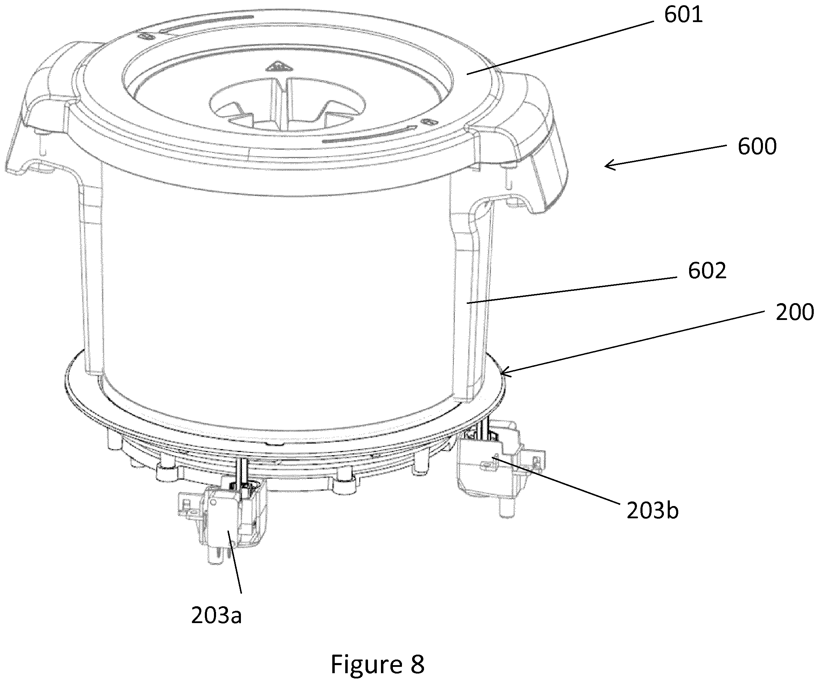

A detailed example of how the correct attachment and type of the container could be detected by the food processing appliance 200 can be seen in Figs. 7 and 8.

In Fig. 7, a smaller container 500 having a removable lid 501 is attached to the platform 201. The secure attachment position of the smaller container 500 is arranged so that, when securely attached (e.g., through the inter-engagement of protrusions on the base of the container 500 and recesses in the platform 201), a push-rod conduit 502 containing a push-rod is positioned above the small container sensor (or interlock) 203a. When the lid 501 is securely attached on the container 500, the push-rod within the push-rod conduit 502 is depressed by the lid 501 and contacts (through a hole in the platform 201 as required) the small container sensor 203a, which transmits a signal to the data processor 206 indicating that it has been actuated (and thus that a small container 500 is securely attached to the platform 201 and that its lid 501 is also securely attached). The data processor 206 then responds to this signal (which can be detailed data-transmission or the simple closing of a circuit) by only energising (or only permitting to be energised) the smaller heating element 101, and permitting the energisation of the motor 204.

In Fig. 8, a larger container 600 having a removable lid 601 is attached to the platform 201. In this case the secure attachment position of the larger container 600 is arranged so that when securely attached the push-rod conduit 602 of the larger container 600 is positioned above large container sensor 203b. Similarly to the arrangement in Fig. 7, attachment of the lid 601 to the container 600, and the container 600 to the platform 201, causes the large container sensor 203b to be actuated by the push-rod within the push-rod conduit 602, thus sending a signal indicating this status to the data processor 206. The data processor 206 then responds to this signal energising (or permitting to be energised) the both heating elements 101 and 102, and permitting the energisation of the motor 204.

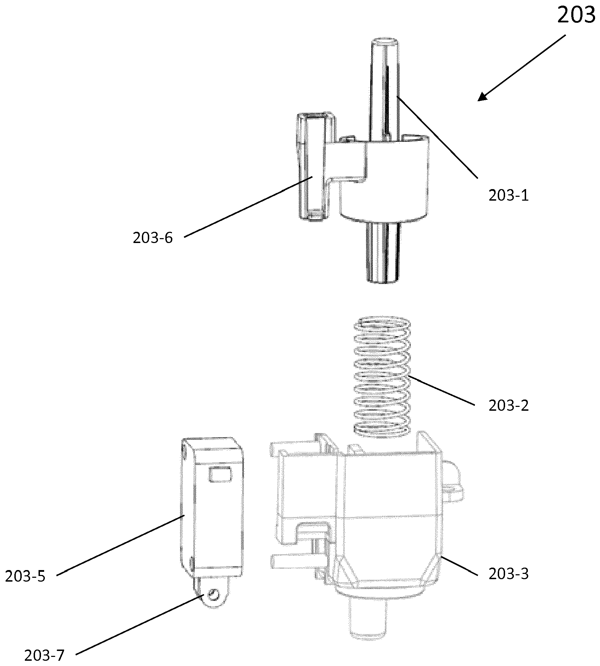

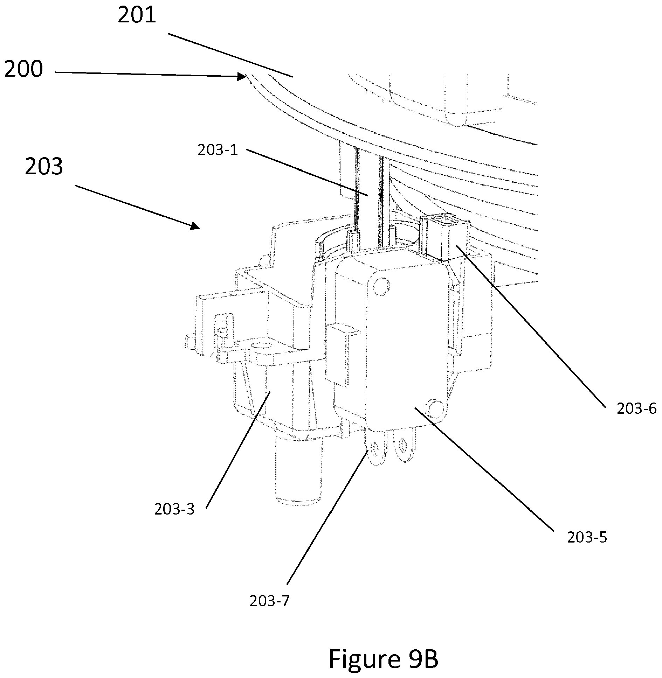

A detailed example of an interlock or sensor 203 is shown in Figs. 9A and 9B. The sensor 203 has a housing 203-3 which surrounds, locates, and protects a plunger 203-1 which can slidingly move away from and toward the housing 203-3. The plunger 203-1 is surrounded partially surrounded by and attached to one end of a return spring 203-2, the other end of the return spring 203-2 being biased against the housing 203-3 to hold the plunger 203-1 away from the housing 203-3 when the spring 203-2 is in an untensioned state. When the plunger 203-1 is pushed towards the housing 203-3 (e.g., by a protrusion of a container received on the platform 201) the actuating section 203-6 attached to the plunger 203-1 is driven to contact with (and/or actuates) the micro-switch 203-5 which then transmits a signal indicating its actuation using the electrical contacts 203-7 to the data processor 206.

It will be understood that the present invention has been described above purely by way of example, and modifications of detail can be made within the scope of the appended claims.

Reference numerals appearing in the claims are by way of illustration only and shall have no limiting effect on the scope of the claims.

## Claims

1. A heating arrangement (100), comprising:
a platform (201) for a container to be heated;
an attachment arrangement (202) for attaching at least two containers (300, 400) of different sizes to the platform;
at least one heating element (101, 102) configured to heat a container on the platform; **characterized by**:
at least one sensor (203) for detecting at least one property relating to the size of a container attached to the platform; and
a control arrangement (206) arranged to control the heating element(s) in dependence on the output of the sensor.

2. A heating arrangement according to claim 1, wherein the at least one property relates to a size of a base of the container.

3. A heating arrangement according to claim 1 or 2, wherein the platform comprises a plurality of heating zones; and the control arrangement is arranged to control the heating element(s) selectively to heat at least one of a plurality of heating zones in dependence on the output of the sensor, and preferably comprising a plurality of heating elements, each corresponding to one of the plurality of heating zones.

4. The heating arrangement of Claim 3, wherein the heating zones are arranged so as to be nested within each other and/or so as to be concentric.

5. The heating arrangement of any preceding claim, wherein the at least one sensor comprises at least one sensor arranged to be actuated by the attachment of a container to the platform and/or a lid (402) to a container, preferably wherein the control arrangement is arranged to energise the heating element only when the attachment of a container and/or of a lid to the container is detected.

6. The heating arrangement of Claim 5, wherein the one or more sensors comprise at least one sensor chosen from the group consisting of:
a. one or more mechanical switches actuatable by attachment ofa container and/or a lid ,
b. one or more radio frequency detectors for detecting and interrogating an electronic tag associated with the container and/or a lid,
c. one or more reed-switches actuatable by a magnet associated with a container and/or a lid,
d. electrical contacts located so as to form a complete circuit with further electrical contacts associated with the container and/or a lid.

7. The heating arrangement of any preceding claim, wherein the at least one heating element includes at least one induction heating element.

8. A kitchen appliance comprising the heating arrangement of any preceding claim.

9. A food processor comprising the heating arrangement of any of claims 1 to 7.

10. The food processor of Claim 9, further comprising a motor-driven drive-shaft (207) for engaging with a food processing tool for driving the food processing tool (403) in a container on the platform for processing food within the container.

11. The food processor of Claim 9 or 10, further comprising a user interface (205) configured to control the energy output of the at least one heating element energized by the heating element control, and provide feedback to the user, preferably wherein the user interface is further configured to provide container attachment status information to a user.

12. The food processor of any of Claims 9 to 11, further comprising two or more containers of differing properties configured to be removably attachable to the platform.

13. The food processor of any of Claims 9 to 12, further comprising a wireless communications module configured to transmit feedback from the at least one sensor to an external server and/or portable electronic communications device.

14. The food processor of any of Claims 9 to 13, wherein the at least one sensor includes a weight sensor and the at least one property includes the weight of food within a container attached to the platform.

## Patentansprüche

1. Heizanordnung (100), aufweisend:
eine Plattform (201) für einen zu beheizenden Behälter;
eine Befestigungsanordnung (202) zur Befestigung von mindestens zwei Behältern (300,400) unterschiedlicher Größe an der Plattform;
mindestens ein Heizelement (101, 102), das zur Beheizung eines Behälter auf der Plattform konfiguriert ist; **gekennzeichnet durch**:
mindestens einen Sensor (203) zum Erfassen mindestens einer Eigenschaft in Bezug auf die Größe eines an der Plattform befestigten Behälters; und
eine Steueranordnung (206), die dazu angeordnet ist, das (die) Heizelement(e) in Abhängigkeit von der Ausgabe des Sensors zu steuern.

2. Heizanordnung nach Anspruch 1, wobei sich die mindestens eine Eigenschaft auf die Größe eines Bodens des Behälters bezieht.

3. Heizanordnung nach Anspruch 1 oder 2, wobei die Plattform eine Vielzahl von Heizzonen umfasst; und die Steueranordnung so angeordnet ist, dass sie das (die) Heizelement(e) selektiv steuert, um mindestens eine aus einer Vielzahl von Heizzonen in Abhängigkeit von der Ausgabe des Sensors zu erwärmen, und vorzugsweise eine Vielzahl von Heizelementen aufweist, von denen jedes einer der Vielzahl von Heizzonen entspricht.

4. Heizanordnung nach Anspruch 3, wobei die Heizzonen so angeordnet sind, dass sie ineinander verschachtelt und/oder konzentrisch sind.

5. Heizanordnung nach einem der vorhergehenden Ansprüche, wobei der mindestens eine Sensor mindestens einen Sensor aufweist, der so angeordnet ist, dass er durch die Befestigung eines Behälters an der Plattform und/oder eines Deckels (402) an einem Behälter betätigt wird, wobei die Steueranordnung vorzugsweise so angeordnet ist, dass sie das Heizelement nur dann erregt, wenn die Befestigung eines Behälters und/oder eines Deckels an dem Behälter erfasst wird.

6. Heizanordnung nach Anspruch 5, wobei der eine oder die mehreren Sensoren mindestens einen Sensor umfassen, der aus der Gruppe bestehend aus:
a. einem oder mehreren mechanischen Schaltern, die durch die Befestigung eines Behälters und/oder eines Deckels betätigt werden können,
b. einem oder mehreren Funkfrequenz-Detektoren zum Erkennen und Abfragen eines elektronischen Etiketts, das mit dem Behälter und/oder einem Deckel zugeordnet ist,
c. einem oder mehreren Reed-Schaltern, die durch einen Magneten betätigt werden können, der einem Behälter und/oder einem Deckel zugeordnet ist,
d. elektrischen Kontakten, die so angeordnet sind, dass sie einen vollständigen Schaltkreis mit weiteren elektrischen Kontakten bilden, die dem Behälter und/oder einem Deckel zugeordnet sind.

7. Heizanordnung nach einem der vorhergehenden Ansprüche, wobei das mindestens eine Heizelement mindestens ein Induktionsheizelement enthält.

8. Küchengerät, aufweisend die Heizanordnung nach einem der vorhergehenden Ansprüche.

9. Nahrungsmittelverarbeitungseinrichtung, aufweisend die Heizanordnung nach einem der Ansprüche 1 bis 7.

10. Nahrungsmittelverarbeitungseinrichtung nach Anspruch 9, ferner mit einer motorgetriebenen Antriebswelle (207) zum Eingriff mit einem Nahrungsmittelverarbeitungswerkzeug, um das Nahrungsmittelverarbeitungswerkzeug (403) in einem Behälter auf der Plattform zum Verarbeiten von Nahrungsmitteln innerhalb des Behälters anzutreiben.

11. Nahrungsmittelverarbeitungseinrichtung nach Anspruch 9 oder 10, die ferner eine Benutzerschnittstelle (205) aufweist, die so konfiguriert ist, dass sie die Energieabgabe des mindestens einen Heizelements, das durch die Heizelementsteuerung erregt wird, steuert und dem Benutzer eine Rückmeldung gibt, wobei die Benutzerschnittstelle vorzugsweise ferner so konfiguriert ist, dass sie einem Benutzer Informationen über den Status der Behälterbefestigung liefert.

12. Nahrungsmittelverarbeitungseinrichtung nach einem der Ansprüche 9 bis 11, ferner aufweisend zwei oder mehr Behälter mit unterschiedlichen Eigenschaften, die so konfiguriert sind, dass sie abnehmbar an der Plattform befestigt werden können.

13. Nahrungsmittelverarbeitungseinrichtung nach einem der Ansprüche 9 bis 12, ferner aufweisend ein drahtloses Kommunikationsmodul, das so konfiguriert ist, dass es Rückmeldungen von dem mindestens einen Sensor an einen externen Server und/oder ein tragbares elektronisches Kommunikationsgerät überträgt.

14. Nahrungsmittelverarbeitungseinrichtung nach einem der Ansprüche 9 bis 13, wobei der mindestens eine Sensor einen Gewichtssensor umfasst und die mindestens eine Eigenschaft das Gewicht von Nahrungsmitteln in einem an der Plattform befestigten Behälter umfasst.

## Revendications

1. Agencement de chauffage (100), comprenant :
une plateforme (201) pour un contenant devant être chauffé ;
un agencement de fixation (202) destiné à fixer au moins deux contenants (300, 400) de dimensions différentes à la plateforme ;
au moins un élément de chauffage (101, 102) configuré pour chauffer un contenant sur la plateforme ; **caractérisé par** :
au moins un capteur (203) destiné à détecter au moins une propriété concernant la dimension d'un contenant fixé à la plateforme ; et
un agencement de commande (206) agencé pour commander l'/les élément(s) de chauffage en fonction de la sortie du capteur.

2. Agencement de chauffage selon la revendication 1, dans lequel l'au moins une propriété concerne une dimension d'une base du contenant.

3. Agencement de chauffage selon la revendication 1 ou 2, dans lequel la plateforme comprend une pluralité de zones de chauffage ; et l'agencement de commande est agencé pour commander l'/les élément(s) de chauffage sélectivement pour chauffer au moins l'une d'une pluralité de zones de chauffage en fonction de la sortie du capteur, et comprenant préférablement une pluralité d'éléments de chauffage, chacun correspondant à l'une de la pluralité de zones de chauffage.

4. Agencement de chauffage selon la revendication 3, dans lequel les zones de chauffage sont agencées de manière à être imbriquées les unes dans les autres et/ou de manière à être concentriques.

5. Agencement de chauffage selon l'une quelconque des revendications précédentes, dans lequel l'au moins un capteur comprend au moins un capteur agencé pour être actionné par la fixation d'un contenant à la plateforme et/ou d'un couvercle (402) à un contenant, préférablement dans lequel l'agencement de commande est agencé pour exciter l'élément de chauffage uniquement quand la fixation d'un contenant et/ou d'un couvercle au contenant est détectée.

6. Agencement de chauffage selon la revendication 5, dans lequel les uns ou plusieurs capteurs comprennent au moins un capteur choisi parmi le groupe constitué par :
(a) un ou plusieurs commutateurs mécaniques pouvant être actionnés par la fixation d'un contenant et/ou d'un couvercle,
(b) un ou plusieurs détecteurs à radiofréquence destinés à détecter et à interroger une étiquette électronique associée au contenant et/ou à un couvercle,
(c) un ou plusieurs commutateurs à lames pouvant être actionnés par un aimant associé à un contenant et/ou à un couvercle,
(d) des contacts électriques situés de manière à former un circuit complet avec des contacts électriques supplémentaires associés au contenant et/ou à un couvercle.

7. Agencement de chauffage selon l'une quelconque des revendications précédentes, dans lequel l'au moins un élément de chauffage inclut au moins un élément de chauffage par induction.

8. Ustensile de cuisine comprenant l'agencement de chauffage selon l'une quelconque des revendications précédentes.

9. Robot ménager comprenant l'agencement de chauffage selon l'une quelconque des revendications 1 à 7.

10. Robot ménager selon la revendication 9, comprenant en outre un arbre d'entraînement entraîné par un moteur (207) destiné à entrer en prise avec un outil de transformation d'aliments pour entraîner l'outil de transformation d'aliments (403) dans un contenant sur la plateforme pour transformer les aliments au sein du contenant.

11. Robot ménager selon la revendication 9 ou 10, comprenant en outre une interface utilisateur (205) configurée pour commander la sortie d'énergie de l'au moins un élément de chauffage excité par le dispositif de commande d'élément de chauffage, et fournir un retour d'information à l'utilisateur, préférablement dans lequel l'interface utilisateur est configurée en outre pour fournir des informations de statut de fixation d'un contenant à un utilisateur.

12. Robot ménager selon l'une quelconque des revendications 9 à 11, comprenant en outre deux contenants ou plus ayant des propriétés différentes, configurés pour pouvoir être fixés de manière détachable à la plateforme.

13. Robot ménager selon l'une quelconque des revendications 9 à 12, comprenant en outre un module de communication sans fil configuré pour émettre un retour d'information de l'au moins un capteur à un serveur externe et/ou à un dispositif de communication électronique portable.

14. Robot ménager selon l'une quelconque des revendications 9 à 13, dans lequel l'au moins un capteur inclut un capteur de poids et l'au moins une propriété inclut le poids des aliments au sein d'un contenant fixé à la plateforme.
